# EUROPÄISCHE PATENTSCHRIFT

(11) **EP 0 540 935 B1**
(45) Veröffentlichungstag und Bekanntmachung des Hinweises auf die Patenterteilung: **13.09.1995**
(21) Anmeldenummer: 92117943.8
(22) Anmeldetag: 20.10.1992
(51) Int. Cl.: F16L 59/16, F16L 59/22

(54) **Formteil zur Wärme- und/oder Schallisolierung von Rohrleitungselementen**
Preformed part for thermal and/or acoustic isolation of pipe elements
Pièce préformée pour l'isolation thermique et/ou phonique des éléments de tuyau

(30) Priorität: 06.11.1991 DE 4136529
(43) Veröffentlichungstag der Anmeldung: 12.05.1993
(73) Patentinhaber: E. Missel GmbH & Co., D-70374 Stuttgart (DE)
(72) Erfinder: Schäfer, Wolfgang, W-7000 Stuttgart 50 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- CH-A- 451 493
- US-A- 3 222 777
- US-A- 3 559 694
- US-A- 4 830 060

## Beschreibung

Die Erfindung betrifft ein Formteil zur Wärme- und/oder Schallisolierung von Rohrleitungselementen nach dem Oberbegriff des Anspruchs 1.

Derartige Formteile zur Wärme- und/oder Schallisolierung von Rohrleitungselementen können beispielsweise mittels eines einseitig angeordneten Langsschlitzes über die entsprechenden Rohrleitungsbögen, -winkel oder -abzweigungen gestülpt werden, so daß das umständliche Umwickeln mit Isolierbändern entfällt und eine lückenlose Isolierung der Rohrleitungen auch im Bereich der Bögen, Winkel und Abzweigungen gewährleistet ist.

Die Formteile bestehen bekannterweise aus mehreren einzelnen, geradlinigen Abschnitten, die an den jeweiligen Verbindungsstellen zur gegenseitigen Verbindung bestimmte Schrägflächen oder gekrümmte Flächen ausweisen und an diesen Verbindungsstellen miteinander verklebt sind. Problematisch ist dabei jedoch, daß bei starker mechanischer Beanspruchung nicht ausgeschlossen werden kann, daß sich die Klebeverbindungen lösen.

Die US-A-3 222 777 beschreibt ein Verfahren zur Bildung einer Gehrungsverbindung zur Rohrisolierung, bei dem die Verbindungsstellen zweier Isolierungsabschnitte jeweils von einem gürtelartigen Band bedeckt werden. Bei diesem Verfahren besteht jedoch die Gefahr, daß bei hoher Beanspruchung die Isolierungsabschnitte unter dem Band herausrutschen.

Aus der US-A-3 559 694 ist ein Formstück für Rohrverbindungen bekannt, das aus zwei Halbschalen besteht, die über Haken und Haltebauteile miteinander verbunden werden. Da die Verbindung lediglich an einigen wenigen Punkten erfolgt, wird durch dieses bekannte Formstück keine besonders sichere Rohrisolierung geschaffen. Außerdem wird in dieser Druckschrift nicht die Verbindung der Stirnseiten von Isolierungsabschnitten beschrieben.

Die US-A-4 830 060 beschreibt eine spezielle Abdeckung für isolierte Y-förmige Verbindungen, mit der lediglich eine sich zwischen zwei geraden Rohrstücken befindliche Abzweigung, die zuvor durch Umwickeln mit Isolierungsmaterial isoliert worden ist, so abgedeckt wird, daß die Isolierungen der geraden Rohrstücke überlappt werden. Eine Verbindung der Stirnseiten von Isolierungsabschnitten wird auch in dieser Druckschrift nicht beschrieben.

Aus der CH-A-451 493 ist ein Verfahren zur Herstellung von Bogenstücken für isolierte Rohrleitungen bekannt, bei dem der Zwischenraum zwischen einem Rohr und einer Schutzhülle zur Bildung der Rohrisolierung ausgeschäumt wird. Eine Möglichkeit zur Verbindung der Stirnseiten zweier Isolierungsabschnitte wird auch in dieser Druckschrift nicht angegeben.

Der Erfindung liegt die Aufgabe zugrunde, ein Formteil der eingangs genannten Art zu schaffen, welches auch bei hoher Beanspruchung eine sichere und reißfeste Verbindung der einzelnen Formteilabschnitte gewährleistet.

Diese Aufgabe wird erfindungsgemäß durch die Merkmale des Anspruchs 1 gelöst.

Durch das Anbringen von einem oder mehrerer, die Schnitt- oder Verbindungsstelle der aneinandergefügten Formteilabschnitte überbrückender Kopplungselemente, durch die eine Nähverbindung geschaffen wird, kann eine sichere und dauerhafte Verbindung der einzelnen Abschnitte erzielt werden. Die mit dem Schaumstoff verbundene Schicht aus einem Material von höherer Reißfestigkeit verhindert dabei, daß das Material an den Stellen, an denen die kopplungselemente eingreifen, ausreißt.

Eine besondere feste und dauerhafte Verbindung ergibt sich, wenn die Abschnitte miteinander zusätzlich verklebt sind.

Die Festigkeit der Verbindung zwischen den Abschnitten kann noch dadurch erhöht werden, daß auf dem Außenumfang der Abschnitte ein die Verbindungsstelle überdeckendes Klebeband aufgebracht wird und die Kopplungselemente im Bereich des Klebebands in Halteeingreif mit den Abschnitten gelangen.

Ein derartiges Klebeband verstärkt die Verbindung der Abschnitte gleich in zweifacher Weise: zum einen wirkt das Klebeband dadurch, daß es die Verbindungsstelle überbrückt, selbst als Kopplungsglied zwischen den Abschnitten, und zum anderen verstärkt das Klebeband die Reißfestigkeit des Materials der Abschnitte in denjenigen Bereichen, in denen die Kopplungselemente mit dem Material in Halteeingriff gelangen.

Eine feste Verbindung zwischen den einzelnen Abschnitten läßt sich auf sehr einfache Weise dadurch erreichen, daß das Kopplungselement aus einem insbesondere in der Form eines Zick-Zack-Stiches über die Schnittstelle geführten Faden besteht, mit dem die Abschnitte aneinandergenäht sind.

Gemäß einer Ausführungsvariante der Erfindung besteht das Kopplungsglied aus einem über die Schnittstelle geklebten Klebeband, welches mittels parallel zur Schnittstelle vorgesehener Nähte an den Abschnitten festgenäht ist.

Die Erfindung wird nachfolgend anhand der Zeichnung beispielsweise näher erläutert; in dieser zeigt
- Figur 1: eine Explosionsdarstellung der beiden Abschnitte eines bekannten Formteils für eine Rohrleitungsabzweigung,
- Figur 2: eine schematische Seitenansicht des Formteils von Figur 1, bei dem die beiden Abschnitte in der erfindungsgemäßen Weise mittels einer Nähverbindung aneinander befestigt sind,
- Figur 3: eine Explosionsdarstellung eines aus drei Abschnitten zusammengesetzten, bekannten Formteils für einen Rohrleitungsbogen und
- Figur 4: eine Seitenansicht des Formteils von Figur 3, bei dem die drei Abschnitte in der erfindungsgemäßen Weise mittels einer Nähverbindung aneinander befestigt sind.

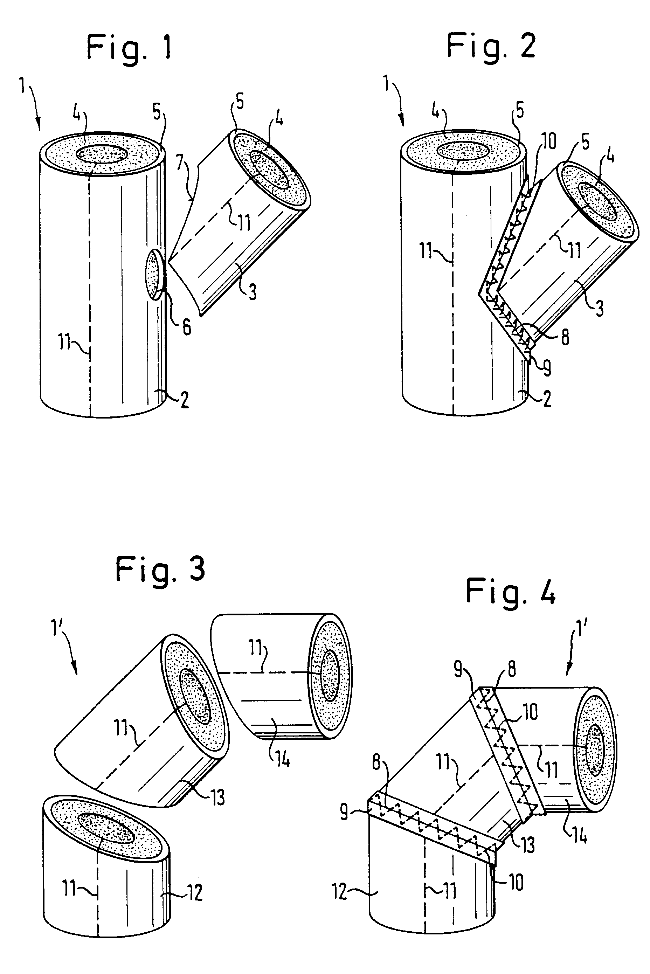

Die Figuren 1 und 2 zeigen ein Formteil 1 für eine nicht dargestellte Abzweigung einer Rohrleitung, wobei das Formteil 1 aus zwei geradlinigen Abschnitten 2, 3 eines Dämmschlauches aufgebaut ist, welcher eine innere Dämmschicht 4 aus einem insbesondere weichen Schaumstoff und eine mit dem Schaumstoff verbundene äußere Schicht 5 aus einem Material von höherer Reißfestigkeit aufweist.

Der für den durchlaufenden Rohrstrang bestimmte Abschnitt 2 weist eine kreisförmige Ausstanzung 6 und der Abzweigungsabschnitt 3 eine gekrümmte Anschlußfläche 7 auf, die ein formschlüssiges Ansetzen des Abschnitts 3 an den geraden Abschnitt ermöglicht.

Bei der Herstellung des Formteils 1 wird zuerst die Anschlußfläche 7 des Abschnitts 3 entsprechend der Außenkontur des Abschnitts 2 zugeschnitten und der Abschnitt 3 am Abschnitt 2 angesetzt. Anschließend wird über die gesamte Länge der Schnittstelle 8 (Figur 2) ein Klebeband 9 derart auf die Abschnitte 2, 3 aufgeklebt, daß die Schnittstelle 8 mittig unterhalb des Klebebands 9 verläuft.

Die beiden Abschnitte 2, 3 werden nun mit Hilfe eines Fadens 10 zusammengenäht, wie schematisch in der Figur 2 dargestellt ist. Der Faden 10 überbrückt dabei die Schnittstelle 8 in einer Zick-Zack-Linie, wobei die Stiche so gesetzt werden, daß sie sowohl auf der Seite des Abschnittes 2 als auch auf der Seite des Abschnittes 3 im Bereich des Klebebands 9 liegen. Auf diese Weise dient das Klebeband 9 als Verstärkungsschicht, die das Ausreißen des Fadens aus dem Material der Abschnitte 2, 3 zusätzlich verhindert.

Die Figuren 3 und 4 zeigen ein Formteil 1' für einen 90°-Bogen, welches aus drei Abschnitten 12, 13, 14 besteht, die an ihren Schrägschnittflächen derart aneinandergefügt werden, daß sich der fertige Bogen mit der gewünschten Krümmung ergibt. Auch hier ist wieder auf einer Seite ein Schlitz 11 vorgesehen, um ein problemfreies Aufbringen auf den Rohrbogen zu ermöglichen.

Wie aus Figur 4 hervorgeht, werden die Abschnitte 12, 13, 14 aneinander ebenfalls wie beim Formteil 1 durch ein auf den äußeren Umfang aufgeklebtes Klebeband 9 und eine zusätzliche Nähverbindung gehalten, wobei der Faden 10 wiederum im Bereich des Klebebands 9 eingestochen wird.

Um das Aufbringen der Formteile 1,1' auf eine Rohrleitungsabzweigung oder einen -bogen ohne jegliche Beeinträchtigung der Zellstruktur des Dämmaterials zu ermöglichen, sind die Formteile längs der gestrichelten Linien 11 vorgeschlitzt, so daß die Formteile 1, 1' längs der Schlitze leicht geöffnet und über die Rohrleitungsabzweigung oder den -bogen gestülpt werden können.

Die Schlitzflächen werden nach erfolgtem Aufbringen mittels eines im Schlitzbereich der Formteile 1, 1' angeordneten, nicht dargestellten Klett- oder Gleitverschlusses aneinander gehalten, der am Außenumfang des Formteils 1, 1' vorzugsweise aufgenäht ist. Der Klett- oder Gleitverschluß kann am Formteil 1, 1' jedoch auch auf andere Weise, beispielsweise durch Kleben, befestigt sein. Ferner ist es auch möglich, die Schlitzflächen nicht durch einen Klett- oder Gleitverschluß miteinander zu verbinden, sondern direkt miteinander zu verkleben.

Es ist auch möglich, statt des in einer Zick-Zack-Linie über die Schnittstelle 8 geführten Fadens 10 das Klebeband 9 mittels zweier parallel zur Schnittstelle 8 verlaufender Nähte an den einander benachbarten Abschnitten zu befestigen oder die einzelnen Abschnitte ohne Klebeband zu vernähen, falls das Material des Formteils selbst genügend reißfest ist.

Weiterhin können die einzelnen Abschnitte 2, 3; 12, 13, 14 zur Erzielung einer besonders sicheren und reißfesten Verbindung zusätzlich zur Nähverbindung miteinander verklebt werden.

## Patentansprüche

1. Formteil zur Wärme- und/oder Schallisolierung von Rohrleitungselementen wie Rohrleitungsbögen, -winkeln und -abzweigungen, bestehend aus zumindest zwei entsprechend der Form der Rohrleitungselemente aneinander befestigten und die Rohrleitungselemente umschließenden Abschnitten, die eine Dämmschicht aus Schaumstoff und eine mit dem Schaumstoff verbundene Schicht aus einem Material von höherer Reißfestigkeit aufweisen, wobei
die Abschnitte (2,3,12,13,14) aneinander mittels einem oder mehrerer, die Verbindungsstelle (8) zwischen den aneinandergefügten Abschnitten (2,3,12,13,14) überbrückender Kopplungselemente befestigt sind,
dadurch **gekennzeichnet,**
daß die Kopplungselemente eine Nähverbindung bilden und sich mit der Schicht (5) aus einem Material von höherer Reißfestigkeit in Halteeingriff befinden.

2. Formteil nach Anspruch 1,
dadurch **gekennzeichnet,**
daß die Abschnitte (2,3,12,13,14) miteinander zusätzlich verklebt sind.

3. Formteil nach Anspruch 1 oder 2,
dadurch **gekennzeichnet,**
daß auf dem Außenumfang der Abschnitte (2,3,12,13,14) ein die Verbindungsstelle (8) überdeckendes Klebeband (9) aufgebracht ist und sich die Kopplungselemente im Bereich des Klebebands (9) in Halteeingriff mit den Abschnitten (2,3,12,13,14) befinden.

4. Formteil nach einem der vorhergehenden Ansprüche,
dadurch **gekennzeichnet,**
daß das Kopplungselement aus einem insbesondere in der Form eines Zick-Zack-Stiches über die Verbindungsstelle (8) geführten Faden (10) besteht, mit dem die Abschnitte (2,3,12,13,14) aneinandergenäht sind.

5. Formteil nach Anspruch 2 oder 3,
dadurch **gekennzeichnet,**
daß das Kopplungselement aus einem über die Verbindungsstelle (8) geklebten Klebeband (9) besteht, welches mittels parallel zur Verbindungsstelle (8) vorgesehener Nahte an den Abschnitten (2,3,12,13,14) festgenäht ist.

6. Formteil nach einem der vorhergehenden Ansprüche,
dadurch **gekennzeichnet,**
daß das Formteil (1, 1') einen sein seitliches Öffnen ermöglichenden Längsschlitz aufweist.

7. Formteil nach Anspruch 6,
dadurch **gekennzeichnet,**
daß das Formteil (1, 1') im Bereich des Längsschlitzes mittels eines am Außenumfang vorzugsweise aufgenähten Klett- oder Gleitverschlusses verschließbar ist.

## Claims

1. Shaped part for the thermal and/or acoustical insulation of pipe elements such as pipe bends, pipe angles and pipe branches, comprising at least two sections which are to be secured together, which correspond to the shape of the pipe elements and which surround the pipe elements, with the sections having an insulating layer of foam material and a layer of higher tear strength connected to the foam, wherein the sections (2, 3, 12, 13, 14) are secured to one another by means of one or more coupling elements which bridge the joint (8) between the joined together sections (2, 3, 12, 13, 14), characterised in that the coupling elements form a seam connection and are in holding engagement with the layer (5) of a material of higher tear strength.

2. Shaped part in accordance with claim 1, characterised in that the sections (2, 3, 12, 13, 14) are additionally adhesively bonded to one another.

3. Shaped part in accordance with claim 1 or claim 2, characterised in that an adhesive tape (9) which bridges the joint (8) is applied to the outer periphery of the sections (2, 3, 12, 13, 14) and the coupling elements are located in holding engagement with the sections (2, 3, 12, 13, 14) in the region of the adhesive tape (9).

4. Shaped part in accordance with one of the preceding claims, characterised in that the coupling element consists of a thread (10) which is in particular guided in the form of a zig-zag stitch over the joint (8), with the sections (2, 3, 12, 13, 14) being sewn together with the thread (10).

5. Shaped part in accordance with claim 2 or claim 3, characterised in that the coupling element comprises an adhesive tape (9) adhered over the joint (8), with the adhesive tape (9) being firmly sewn to the sections (2, 3, 12, 13, 14) by means of seams provided parallel to the point of connection (8).

6. Shaped part in accordance with one of the preceding claims, characterised in that the shaped part (1, 1') has an elongate slot which makes it possible for it to be opened at the side.

7. Shaped part in accordance with claim 6, characterised in that the shaped part (1, 1') can be closed in the region of the elongate slit by means of a touch-close fastener or a zip fastener at the outer periphery, preferably a sewed on touch-close fastener or zip fastener.

## Revendications

1. Pièce préformée pour l'isolation thermique et/ou acoustique d'éléments de tuyauterie, comme des coudes, des angles et des embranchements de tuyauterie, constituée par au moins deux tronçons fixés l'un à l'autre en correspondance de la forme des éléments de tuyauterie et entourant les éléments de tuyauterie, ces tronçons présentant une couche d'isolation en mousse et une couche reliée à la mousse et constituée en un matériau d'une résistance élevée à la déchirure, les tronçons (2, 3, 12, 13, 14) étant fixés les uns aux autres au moyen d'un ou plusieurs éléments d'accouplement qui recouvrent l'emplacement de liaison (8) entre les tronçons (2, 3, 12, 13, 14) assemblés les uns aux autres,
caractérisée en ce que les éléments d'accouplement forment une liaison cousue et se trouvent en engagement de retenue avec la couche (5) en un matériau d'une résistance élevée à la déchirure.

2. Pièce préformée selon la revendication 1,
caractérisée en ce que les tronçons (2, 3, 12, 13, 14) sont en supplément collés les uns aux autres.

3. Pièce préformée selon l'une ou l'autre des revendications 1 et 2,
caractérisée en ce qu'un ruban collant (9) qui recouvre l'emplacement de liaison (8) est posé sur la périphérie extérieure des tronçons (2, 3, 12, 13, 14), et en ce que les éléments d'accouplement dans la région du ruban collant (9) se trouvent en engagement de retenue avec les tronçons (2, 3, 12, 13, 14).

4. Pièce préformée selon l'une quelconque des revendications précédentes,
caractérisée en ce que l'élément d'accouplement est constitué par un fil (10), guidé en particulier sous la forme d'un point en zigzag par dessus l'emplacement de liaison (8), au moyen duquel sont cousins les tronçons (2, 3, 12, 13, 14) les uns aux autres.

5. Pièce préformée selon l'une ou l'autre des revendications 2 et 3,
caractérisée en ce que l'élément d'accouplement est constitué par un ruban collant (9) collé par dessus l'emplacement de liaison (8), qui est cousu au moyen de coutures prévues parallèlement à l'emplacement de liaison (8) sur les tronçons (2, 3, 12, 13, 14).

6. Pièce préformée selon l'une quelconque des revendications précédentes,
caractérisée en ce que la pièce préformée (1, 1') présente une fente allongée qui permet son ouverture latérale.

7. Pièce préformée selon la revendication 6,
caractérisée en ce que la pièce préformée (1, 1') peut être refermée dans la région de la fente allongée au moyen d'une fermeture à crochets-et-bouclettes ou à glissière, de préférence cousue sur la périphérie extérieure.
